# EUROPEAN PATENT SPECIFICATION

(11) **EP 2 148 912 B1**
(45) Date of publication and mention of the grant of the patent: **26.01.2011**
(21) Application number: 08758714.3
(22) Date of filing: 19.05.2008
(51) Int. Cl.: C10G 47/26, C10G 47/02, C10G 49/04

(54) **PROCESS FOR THE HYDROCONVERSION OF HEAVY OILS**
VERFAHREN ZUR HYDROKONVERSION VON SCHWERÖLEN
PROCÉDÉ D'HYDROCONVERSION D'HUILES LOURDES

(30) Priority: 23.05.2007 IT MI20071045
(43) Date of publication of application: 03.02.2010
(73) Proprietor: ENI S.p.A., 00144 Rome (IT)
(72) Inventor: PATRON, Luigi, I-20129 Milano (IT); MALANDRINO, Alberto, I-20138 Milan (IT); MOLINARI, Mario, I-20097 San Donato Milanese (Milan) (IT)
(74) Representative: De Gregori, Antonella
(86) International application number: PCT/EP2008/004117
(87) International publication number: WO 2008/141830

(56) References cited:
- EP-A- 0 559 399
- US-A- 5 932 090

## Description

The present invention describes a process used for the complete and high-productivity conversion of heavy oils comprising sending the heavy oil to a high-severity hydrotreatment step, in the presence of a hydrogenation catalyst based on molybdenum in slurry phase, effected in a reactor of the bubble tower type, wherein the hydrogen acts as a fluid-dynamic kinetic vector and as a carrier of the conversion products, which operates with the accumulation of coke and metallic sulphides, obtaining the conversion products as outflow of the vapour phase directly in the reactor.

In processes used in the hydroconversion of heavy hydrocarbon residues, the feedstock to be treated is put in contact with hydrogen in the presence of a hydrogenation catalyst under suitable temperature and pressure conditions. The feedstock to be treated is continuous fed to the reactor. The conversion degree per single passage is never total, on the contrary it is far from being so, to the extent that in industrial practice at least two reactors must be put in series to obtain a conversion degree which reaches at least 70%. The fraction of non-converted feedstock is destined for fuel oil or other equivalent uses, which gives low economic remuneration and at times is environmentally problematical.

In order to obtain the total zeroing of the fuel oil, i.e. the total conversion of the heavy oil to products, the method has been adopted of recycling the non-converted asphaltene residue to the reaction, i.e. that remaining of the liquid stream of the reactor, normally removed at the outlet by a high-pressure liquid/vapour phase separator, after recovering the conversion products obtained by distillation (U.S. Patent 4,066,530), or by distillation and subsequent extraction with a solvent (U.S. Patent 5,932,090).

The recovery of the conversion products contained in the liquid phase at the outlet of the reactor is extremely important for minimizing the recycling to the reactor and increasing the productivity. For this purpose, a whole plant section is necessary for the recovery of the products and separation of the catalyst and non-converted residue to remove the metals deriving from the feedstock and coke generated in the reaction.

The sequence of operations required, however, is not easy to effect due to the formation of coke when the liquid effluent is thermally treated in the absence of hydrogen, as for example in vacuum distillation for the extraction of high-boiling products. The formation of coke also produces negative effects on the activity of the catalyst. As a result of this, it has been proposed (U.S. Patent 5,298,152) to constantly maintain the liquid phase of the recycling in a hydrogen atmosphere, at a minimum pressure, introducing however precise limits for the recovery of the high-boiling conversion products contained therein.

The recycling of the catalyst can also be critical as a result of agglomeration phenomena of the asphaltenes and settling of the catalyst itself (U.S. Pat. Appl. 2006/00545333A1) which can be remedied by adding further operations and equipment in the recycling section. Only partial solutions are therefore proposed, in some cases not without counter-indications.

From what is known so far, the process phases which have not yet found fully satisfactory solutions relate to:
- the separation and consequently recycling of the catalyst for the removal of the solids deriving from and generated by the feedstock treated.
- the recovery of the conversion products contained in the liquid phase of the reaction medium.

A process has now been found, which can be applied to heavy oils, selected from crude oils, heavy crude oils, bitumens from tar sands, distillation residues, heavy distillation cuts, deasphalted distillation residues, vegetable oils, oils deriving from coke and oil shales, oils obtained from the thermodecomposition of waste products, polymers, biomasses, which totally solves the problems so far encountered in hydrocracking processes for the total conversion of heavy residues to distillates which uses a solid accumulation hydroconversion reactor capable of operating stably in the presence of high concentrations of solids deriving from and generated by the feedstock hydrotreated under high-severity conditions, of the bubble tower type with the introduction of hydrogen or a mixture of hydrogen and H₂S. As a result of operating with a high accumulation of solids, this process allows the direct removal, by flushing, of solids deriving from and generated by the feedstock treated, obtaining the conversion products as outflow from the gaseous phase directly in the reactor. The catalyst and non-converted residue constantly remain inside the reactor.

By operating according to the process proposed, the problems and plant complexity which would be encountered by proceeding contrary to the present case, with the separation of the asphaltene residue and recycling of the catalyst in specific and dedicated sections of the plant, are overcome.

The process, object of the present invention, for the hydroconversion of heavy oils, comprises sending the heavy oil to a hydrotreatment step with a high severity index and a high concentration, in the presence of a hydrogenation catalyst based on molybdenum in slurry phase, effected in a solid accumulation reactor of the bubble tower type, operating under such conditions as to obtain conversion products in vapour phase directly in the reactor.

In order to obtain the advantages of the complete con-vertibility, under high-severity conditions, of heavy oils to products, their extraction in vapour phase directly in the reactor, as well as the consequent plant simplification, it is important to define the specific conditions for:
- running the solid accumulation reactor with high concentrations of coke and metallic sulphides deriving from and generated by the feedstock fed, under conditions of stability, effecting the removal of the solids directly from the reactor by the application of a flushing having a limited entity,
- introducing hydrogen to obtain a fluid-dynamic regime which is such as to ensure, through induced stirring, a high homogeneity of the reaction mass, in particular when it is necessary to operate with a high concentration of coke and metallic sulphides, contextually carrying the conversion products in the gaseous phase for their direct extraction.

It is known that an increase in the hydrotreatment temperature to create severer reaction conditions and consequently increase the cracking to light products, causes, especially above certain levels, a marked formation of coke and also insoluble asphaltene resins. By effecting the hydrocracking under high-severity conditions, the production of coke is such as to make the use of high catalytic concentrations, necessary for ensuring the required hydrogenation rate, problematical and uneconomical. The use of a solid accumulation reactor, suitably run at a catalyst level, is the solution proposed herein. The reactor is homogeneously stirred, operates under stationary conditions and is of the bubble tower type. The gaseous kinetic vector which ensures the fluid-dynamic regime of the reactor consists of the same hydrogen, i.e. a mixture containing hydrogen, used in the reaction.

The hydrogen is fed to the base of the reactor through a suitably designed apparatus (distributor on one or more levels) for obtaining the best distribution and most convenient average dimension of the gas bubbles and consequently a stirring regime which is such as to guarantee homogeneity conditions and a stable temperature control, also operating in the presence of high concentrations of solids, deriving from and generated by the feedstock treated when the fluid-dynamic regime is generated by a quantity of hydrogen at least equal to 500 kg/h per m² of section of the reactor. As a result of the operating conditions envisaged, there should be no elements inside the reactor which can prevent a uniform stirring of the reaction mass, such as, for example, fixed or mobile catalytic beds or other types of obstacles. -

The hydrogenation catalyst based on molybdenum, preferably finely dispersed, can be a decomposable precursor or a preformed compound and can optionally also contain one or more transition metals.

This catalyst is initially charged, "*una tantum*" in proportion to the reaction volume to be continuously kept in the reaction medium. In this way, the catalyst almost indefinitively maintains its activity without any necessity of intervention, thus completely eliminating the deactivation problems widely described in scientific and patent literature. An integration of catalyst is required, in any case without ever separating the catalyst itself from the reaction medium, when a flushing is effected.

By using the process according to the invention, it is possible to allow the solids generated by the feedstock (metal sulphides and coke) to accumulate inside the reaction mass, in particular when operating under high severity conditions, at very high concentrations, for example up to 200 kg per m³ and over, without creating adverse effects on the catalyst activity and the functionality of the overall reaction system. Once the pre-established accumulation level has been reached, the metal sulphides and coke generated by the feedstock being processed are directly and continuously removed from the reaction medium by flushing. The quantity of catalyst removed with the flushing is integrated to the same amount in continuous or batchwise but at regular time intervals. If the feedstock to be treated has a low metal content and a limited carbonaceous residue, the accumulation rate of the solids in the reaction medium is minimum and consequently the flushing necessary for removing the solids generated is negligible and the reintegration of the catalyst is also minimum.

With reference to the formation of coke, on the basis of experimentations carried out by the proponent, it has also proved useful to describe *in primis* the behaviour of the feedstock through measuring the quantity of insoluble residue which is produced in the reaction according to an analytical method specifically developed for the characterization of asphaltene residues with a high solid content. Once the reaction mass has been diluted with tetrahydrofuran, the insoluble products which are recovered by filtration consist of the metal sulphides initially present in the feedstock and the coke formed during the reaction. Insoluble asphaltene resins, precursors of coke can also be present.

The catalyst is also present in proportion to the quantities used. The quantity measured of products insoluble in tetrahydrofuran (THF₁) supplies, less the quantity of insoluble resins present, the quantity of coke and metal sulphides which are produced in the reaction, to be removed by flushing. It has been experimentally found that this value increases significantly when the hydrocracking conditions become more severe, rapidly exceeding 3 kg per ton of feedstock processed. Starting from this level of THF₁, in order to be able to operate in the presence of a high concentration of catalyst based on molybdenum, not lower than 5 kg per m³ referring to the reaction medium and preferably not lower than 8 kg per m³, an accumulation level of solids in the reaction medium not lower than 50 kg per m³ and preferably not lower than 100 kg per m³, is selected; in particular when the characteristics of the feedstock and severity conditions of the reaction are such as to generate a formation of residues insoluble in tetrahydrofuran at levels of at least 3 kg per ton fed. Once the pre-established accumulation level has been reached, after the start-up of the reactor, the metal sulphides and coke generated by the feedstock being processed are directly and continuously removed from the reaction medium, by flushing, in proportion to the quantity generated. The entity of the flushing required depends on the rate at which the coke and metal sulphides are generated and on the concentration of solids in the reaction medium under stationary conditions. By operating according to the process described, the flushing can be easily maintained at a level lower than 2% with respect to the feedstock fed.

The solid accumulation reactor is preferably run under hydrogen pressure or a mixture of hydrogen and hydrogen sulphide, ranging from 100 to 200 atmospheres, within a temperature range of 400 to 480°C. As a result of the prerogatives of the high solid accumulation reactor, high-severity operating conditions can be used, and therefore at higher temperature levels, also with a generation of products insoluble in tetrahydrofuran which reaches or exceeds 10 kg per ton of feedstock processed.

The hydrogen fed by means of the distribution apparatus to the base of the reactor, acting as kinetic vector which generates the-fluid-dynamic regime of the reactor, is also used as a gaseous carrier of the conversion products by regulating the flow-rate with respect to the feedstock fed to the reactor. For values of the hydrogen flow-rate (kg/h)/feedstock flow-rate (kg/h) ratio higher than 0.3, and preferably higher than 0.5, the carrying effect is such as to transfer most of the products with a boiling point close to the temperature of the reactor, to the gaseous phase. By further increasing the hydrogen/feedstock ratio the carrying also involves the high-boiling products. High severity conditions lead to an increase the outflow in vapour phase.

The solid accumulation reactor, as described above, can operate with partial liquid filling. In this case, the L (liquid)/V (vapour) separation surface is positioned in the upper part of the reactor. The conversion products are recovered by condensation of the gaseous effluent which, having passed from the bottom of the reactor upwards, leaves the top part of the same.

The solid accumulation reactor can also operate with total liquid filling with a biphasic effluent. In this case, the reactor includes a phase separator, with one or more steps, where the L/V interface is positioned, from whose head the converted products are obtained. The liquid phase is recirculated directly to the reactor.

Due to the specific functioning conditions of the reaction section, with a constant liquid volume, the flow-rate of the charge being fed cannot be established a priori but necessarily and exclusively derives from the conversion capacity.

In practice, the feeding flow-rate is regulated by the level indicator, situated at the pre-selected L/V interface. The flow-rate of the feedstock thus regulated can vary from 50 to 300 kg/h per m³ of reaction volume depending on the degree of severity of the pre-established reaction conditions.

An example is provided hereunder for a better illustration of the invention but this should not be considered as being limited thereto or thereby.

### Example 1

A reactor of the bubbling tower type is used, which operates with total filling, in which the outlet of the biphasic effluent is positioned in the top part, which comprises a phase separator for the separation of the gaseous stream in which the conversion products are contained. The liquid phase is recirculated to the reactor. The outflow of the reactor thus conceived exclusively consists, without the flushing, of vapour phase.

The hydrogen necessary for sustaining the fluid-dynamic regime of the reactor and also for producing a carrier effect for the removal of the products is introduced into the base of the reactor, together with the reaction hydrogen. A hydrogen/feedstock flow-rate ratio of 0.63 is adopted. The hydrogen is sent at 530°C to preheat the fresh feedstock in the feeding consisting of vacuum residue obtained from obtainted from Borealis Canadian bitumen containing 5.1% of sulphur, 19% of asphaltenes from n-pentane and THFᵢ < 1 kg/ton. For the determination of the insoluble products in tetrahydrofuran, the following procedure is adopted. Weighing a quantity of sample ranging from 1 to 5 g approximately. Dissolving the sample with a few ml of THF and transferring it completely, by means of successive washings, to a suitably sized flask. Subsequently adding further THF until a dilution of sample of 40 times (w/w) is obtained. Treating the solution in an ultrasound bath for about 10 minutes; transferring the flask to a rotating evaporator and keeping it under stirring at a temperature of 50°C for 5 minutes, preventing the evaporation of the solvent. Letting the flask rest at room temperature for 30 minutes. Filtering the solution under vacuum, using Teflon filters with a porosity of 5 µm. Subsequently recovering with THF, any possible particles of insoluble products remaining on the bottom of the flask. Repeatedly washing the filter with THF and letting the residue dry for about one minute. Transferring the filter with the residue to a Petri capsule. Drying under vacuum at 150°C for 30 minutes. Removing from the oven and cooling for 5 minutes. Weighing the filter. The solids obtained are compared with the weight of the starting sample.

The catalyst is charged "una tantum" at the start-up of the reactor. In this specific case, a quantity of molybdenum octoate (expressed as molybdenum) equal to 7 kg is charged for each m³ of reaction volume.

Under the pre-established reaction conditions (T : 433°C; P : 160 bar) a ton of residue from Borealis vacuum generates 4.473 kg of residue insoluble in tetrahydrofuran of which 0.639 kg refer to the metal sulphides (prevalently Ni and V) contained in the feedstock, the complement consisting of coke and insoluble asphaltene resins.

The residues insoluble in tetrahydrofuran were left to accumulate for several days until reaching a percentage of 14% (corresponding to 75 kg per m³ of reaction volume of coke and metallic sulphides) and at this point the flushing was initiated so as to equalize the quantity of solids deriving from and generated by the feedstock. The formation of products insoluble in THF proved to be constant in the increase phase of the concentration of solids in the reaction mass, as also in the subsequent operating period, confirming a constant level of the activity of the catalyst thus used.

The flow-rate of the feedstock in the feeding necessary for keeping the level of liquid measured at the phase separator constant, proved to be equal to 122 kg/h per m³ of reaction volume. The conversion products are recovered by condensation from the outflow in vapour phase. The quantity of products with boiling points ranging from 200 to 500°C is equal to 41.6%.

## Claims

1. A process for the hydroconversion of heavy oils, selected from crude oils, heavy crude oils, bitumens from tar sands, distillation residues, heavy distillation cuts, deasphalted distillation residues, vegetable oils, oils deriving from coke and oil shales, oils obtained from the thermodecomposition of waste products, polymers, biomasses, effected in a suitable solid accumulation reactor with a specific hydrogenation catalyst in slurry phase and with the introduction of hydrogen or a mixture of hydrogen and H₂S,
comprising sending the heavy oil to a hydroconversion step with a high severity index, producing a quantity of products insoluble in tetrahydrofuran (THF₁) of at least 3 kg per ton of feedstock converted, and with a high concentration of a catalyst based on molybdenum in slurry phase, the quantity of molybdenum being at least 5 kg per m³ referring to the reaction medium, effected in a reactor of the bubbling tower type, operating with an accumulation of solids in the reaction medium of at least 50 kg/m³ consisting of coke and metallic sulphides deriving from the feedstock, wherein the hydrogen introduced is in a weight ratio of at least 0.3 with respect to the feedstock, obtaining the conversion products in vapour phase directly in the reactor.

2. The process according to claim 1, wherein the non-converted heavy oil remains constantly in the reaction medium.

3. The process according to claim 1, wherein the hydrogenation catalyst remains continuously in the reaction medium.

4. The process according to claim 1, wherein the solids deriving from and generated by the heavy oils to be converted are removed exclusively by flushing.

5. The process according to claim 1, wherein the catalyst is charged into the reactor at the start-up of the hydrogenation reaction, in proportion to the volume of the reactor, and continuously maintained inside the reaction medium.

6. The process according to claim 4, wherein the catalyst present in the flushing is integrated in the reactor in continuous or batchwise.

7. The process according to claim 1, wherein the hydrogenation catalyst based on molybdenum is a decomposable precursor or a preformed compound of the same.

8. The process according to claim 1 or 7, wherein the catalyst additionally contains one or more transition metals.

9. The process according to claim 1, wherein the quantity charged into the reactor of the transition metal contained in the catalyst, expressed as a concentration of molybdenum, is at least 8 kg per m³ referring to the reaction medium.

10. The process according to claim 1, wherein the reactor operates with an accumulation level of solids of at least 100 kg per m³ referring to the reaction medium.

11. The process according to claim 1, wherein the hydrotreatment step is carried out at a temperature ranging from 400 to 480°C and a pressure ranging from 100 to 200 atmospheres.

12. The process according to claim 1, wherein the feedstock flow-rate necessary for keeping the volume of reaction liquid constant ranges from 50 to 300 kg/h per m³ of reaction volume.

## Patentansprüche

1. Verfahren zur Hydrokonversion von Schwerölen, ausgewählt aus Rohölen, schweren Rohölen, Bitumen von Teersanden, Destillationsrückständen, schweren Destillationsschnitten, entasphaltierten Destillationsrückständen, pflanzlichen Ölen, Ölen aus Koks und Ölschiefern, aus der thermischen Zersetzung von Abfallprodukten, Polymeren, Biomassen erhaltenen Ölen, wobei das Verfahren in einem geeignetem Feststoffansammelreaktor mit einem spezifischen Hydrierungskatalysator in Aufschlämmungsphase und unter Einführung von Wasserstoff oder einer Mischung von Wasserstoff und H₂S erfolgt,
umfassend Leiten des schweren Öls zu einem Hydrokonversionsschritt mit einem hohen Severity-Index, Herstellen einer Vielzahl von in Tetrahydrofuran (THF₁) unlöslichen Produkten von mindestens 3 kg pro Tonne umgesetztes Ausgangsmaterial, und mit einer hohen Konzentration eines Katalysators auf Basis von Molybdän in Aufschlämmungsphase, wobei die Menge von Molybdän mindestens 5 kg pro m³ beträgt, bezogen auf das Reaktionsmedium, wobei das Herstellen in einem Reaktor vom Typ des Sprudelturms erfolgt, Durchführen unter einer Ansammlung von Feststoffen in dem Reaktionsmedium von mindestens 50 kg/m³, bestehend aus Koks und Metallsulfiden aus dem Ausgangsmaterial, wobei der eingeführte Wasserstoff in einem Gewichtsverhältnis von mindestens 0,3 vorliegt, bezogen auf das Ausgangsmaterial, Erhalten der Umsetzungsprodukte in der Gasphase direkt in dem Reaktor.

2. Verfahren nach Anspruch 1, wobei das nicht umgesetzte Schweröl in dem Reaktionsmedium konstant bleibt.

3. Verfahren nach Anspruch 1, wobei der Hydrierungskatalysator in dem Reaktionsmedium kontinuierlich bleibt.

4. Verfahren nach Anspruch 1, wobei die aus den umzusetzenden Schwerölen stammenden und durch die umzusetzenden Schweröle erzeugten Feststoffe ausschließlich durch Spülen entfernt werden.

5. Verfahren nach Anspruch 1, wobei der Katalysator in den Reaktor am Anfang der Hydrierungsreaktion geladen wird, im Verhältnis zu dem Volumen des Reaktors, und innerhalb des Reaktionsmediums kontinuierlich erhalten bleibt.

6. Verfahren nach Anspruch 4, wobei der beim Spülen vorhandene Katalysator im Reaktor kontinuierlich oder diskontinuierlich integriert ist.

7. Verfahren nach Anspruch 1, wobei der Hydrierungskatalysator auf Basis von Molybdän ein zersetzungsfähiger Vorläufer oder eine vorgebildete Verbindung desselben ist.

8. Verfahren nach Anspruch 1 oder 7, wobei der Katalysator zusätzlich ein oder mehrere Übergangsmetalle enthält.

9. Verfahren nach Anspruch 1, wobei die in den Reaktor geladene Menge des Übergangsmetalls, das in dem Katalysator enthalten ist, angegeben in einer Konzentration von Molybdän, mindestens 8 kg pro m³ beträgt, bezogen auf das Reaktionsmedium.

10. Verfahren nach Anspruch 1, wobei der Reaktor mit einem Akkumulationsniveau von Feststoffen von mindestens 100 kg pro m³ läuft, bezogen auf das Reaktionsmedium.

11. Verfahren nach Anspruch 1, wobei die Hydrobehandlung bei einer Temperatur im Bereich von 400 bis 480 °C und einem Druck im Bereich von 100 bis 200 Atmosphären durchgeführt wird.

12. Verfahren nach Anspruch 1, wobei die Ausgangsmaterial-Durchflussgeschwindigkeit, die notwendig ist, um das Volumen von Reaktionsflüssigkeit konstant zu halten, im Bereich von 50 bis 300 kg/h pro m³ des Reaktionsvolumen liegt.

## Revendications

1. Procédé d'hydroconversion d'huiles lourdes, choisies parmi les huiles brutes, les huiles brutes lourdes, les bitumes issus de sables asphaltiques, les résidus de distillation, les coupes de distillation lourdes, les résidus de distillation désasphaltés, les huiles végétales, les huiles dérivant de coke et de schistes bitumineux, les huiles obtenues de la thermodécomposition de produits de résidus, les polymères, les biomasses, effectué dans un réacteur à accumulation de solides approprié avec un catalyseur d'hydrogénation spécifique dans une phase en suspension et avec l'introduction d'hydrogène ou d'un mélange d'hydrogène et de H₂S,
comprenant l'acheminement de l'huile lourde à une étape d'hydroconversion présentant un indice de sévérité élevé, la production d'une quantité de produits insolubles dans du tétrahydrofurane (THF₁) d'au moins 3 kg par tonne de stock d'alimentation converti et une concentration élevée d'un catalyseur à base de molybdène dans une phase en suspension, la quantité de molybdène étant d'au moins 5 kg par m³ par rapport au milieu réactionnel, effectué dans un réacteur du type tour à bouillonnement, fonctionnant avec une accumulation de solides dans le milieu réactionnel d'au moins 50 kg/m³ constitué de coke et de sulfures métalliques dérivés du stock d'alimentation, l'hydrogène introduit étant en un rapport en poids d'au moins 0,3 par rapport au stock d'alimentation, pour obtenir les produits de conversion en phase vapeur directement dans le réacteur.

2. Procédé selon la revendication 1, dans lequel l'huile lourde non convertie reste constamment dans le milieu réactionnel.

3. Procédé selon la revendication 1, dans lequel le catalyseur d'hydrogénation reste constamment dans le milieu réactionnel.

4. Procédé selon la revendication 1, dans lequel les solides dérivés des huiles lourdes à convertir et générés par celles-ci sont éliminés exclusivement par rinçage.

5. Procédé selon la revendication 1, dans lequel le catalyseur est chargé dans le réacteur au début de la réaction d'hydrogénation, en proportion par rapport au volume du réacteur et est maintenu en continu dans le milieu réactionnel.

6. Procédé selon la revendication 4, dans lequel le catalyseur présent dans le rinçage est intégré dans le réacteur en continu ou par lots.

7. Procédé selon la revendication 1, dans lequel le catalyseur d'hydrogénation à base de molybdène est un précurseur décomposable ou un composé préformé de celui-ci.

8. Procédé selon la revendication 1 ou 7, dans lequel le catalyseur contient en outre un ou plusieurs métaux de transition.

9. Procédé selon la revendication 1, dans lequel la quantité chargée dans le réacteur du métal de transition contenu dans le catalyseur, exprimée en une concentration de molybdène est d'au moins 8 kg par m³ par rapport au milieu réactionnel.

10. Procédé selon la revendication 1, dans lequel le réacteur fonctionne avec un niveau d'accumulation de solides d'au moins 100 kg par m³ par rapport au milieu réactionnel.

11. Procédé selon la revendication 1, dans lequel l'étape d'hydrotraitement est réalisée à une température de l'ordre de 400 à 480 °C et une pression de l'ordre de 100 à 200 atmosphères.

12. Procédé selon la revendication 1, dans lequel le débit du stock d'alimentation nécessaire pour maintenir à un niveau constant le volume de liquide réactionnel est de 50 à 300 kg/h par m³ de volume réactionnel.
